# EUROPÄISCHE PATENTSCHRIFT

(11) **EP 3 614 032 B1**
(45) Veröffentlichungstag und Bekanntmachung des Hinweises auf die Patenterteilung: **05.04.2023**
(21) Anmeldenummer: 19193145.0
(22) Anmeldetag: 22.08.2019
(51) Int. Cl.: F16L 55/165, F16L 55/179

(54) **VORRICHTUNG UND VERFAHREN ZUR SANIERUNG EINES ROHRABSCHNITTS EINES ROHRLEITUNGSSYSTEMS**
DEVICE AND METHOD FOR REPAIRING A PIPE SECTION OF A PIPING SYSTEM
DISPOSITIF ET PROCÉDÉ D'ASSAINISSEMENT D'UNE SECTION DE TUYAU D'UN SYSTÈME DE TUYAUTERIE

(30) Priorität: 22.08.2018 DE 102018120513; 08.01.2019 DE 102019100276
(43) Veröffentlichungstag der Anmeldung: 26.02.2020
(73) Patentinhaber: DCF Holding GmbH, 22045 Hamburg (DE)
(72) Erfinder: Decker, Thomas, 22045 Hamburg (DE); Henke, Torsten, 22949 Ammersbek (DE)
(74) Vertreter: RGTH

(56) Entgegenhaltungen:
- FR-A1- 2 542 416
- US-A1- 2004 231 789
- US-A1- 2006 130 923
- US-A1- 2017 159 869
- US-B1- 7 052 567

## Beschreibung

### Technisches Gebiet

Die Erfindung betrifft ein Verfahren sowie eine Vorrichtung zur Sanierung eines Rohrabschnitts eines Rohrleitungssystems, wobei die Sanierungsvorrichtung zumindest einen schlauchförmigen Inliner zum Abdichten einer Beschädigung des Rohrabschnitts sowie ein Heizelement aufweist.

### Stand der Technik

Für das Auskleiden, Reparieren beziehungsweise Abdichten von Leitungen, zum Beispiel Wasser- und Abwasserleitungen, ist die Verwendung eines Auskleidungsschlauchs bekannt. Hierfür werden beschichtete Schläuche durch Reversieren oder Einziehen in das zu reparierende Altrohr eingebracht, wobei eine nach dem Einbringen außenliegende Schicht des Schlauches mit der Innenwand des zu reparierenden beziehungsweise auszukleidenden Altrohrs verklebt wird. Ein solcher Schlauch wird beispielsweise in der WO 00/25057 A1 beschrieben.

Die EP 2 722 157 A1 betrifft einen Auskleidungsschlauch und ein Verfahren zum Rehabilitieren eines Druckrohrs. Der Auskleidungsschlauch ist als Verbundschlauch mit zumindest einer ersten Schicht und einer an die erste Schicht angrenzenden zweiten Schicht ausgebildet, wobei die erste Schicht eine im Wesentlichen fluiddichte und/oder gasdichte Diffusionssperre bildet, wobei die zweite Schicht ein mit einem Harz getränktes textiles Flächengebilde ist und für eine vollflächige Klebeverbindung mit einer Innenwand des zu sanierenden Rohres ausgebildet ist.

US 2017/159869 A1 betrifft einen Schlauchliner, während US 2006/130923 A1 eine Vorrichtung zum Reparieren von Rohren offenbart.

In US 2004/231789 A1 werden ein Verfahren und eine Vorrichtung gegen Grundwasserinfiltration beschrieben. Dabei kann eine flexible und aufblasbare Heizmembran im Innern eines Rohrdurchmessers platziert werden. Die Vorrichtung kann als Reparaturmaterial eine duroplastisch oder thermoplastisch imprägnierte Auskleidung umfassen. Das Reparaturmaterial kann eine Vielzahl von Strukturen aufweisen, einschließlich einer Struktur, die durch eine Anordnung von Fasern definiert ist. Vorzugsweise ist die Materialstruktur im Wesentlichen zylindrisch. Die Auskleidung kann über die flexible und aufblasbare Heizmembran gelegt werden. Die Komponenten der aufblasbaren Membran können leitfähige Fasern enthalten, die an eine elektrische Stromquelle angeschlossen werden können. Diese leitfähigen Fasern können, wenn sie mit elektrischem Strom versorgt werden, für eine elektrische Widerstands- oder Impedanzheizung sorgen.

US 7 052 567 B1 offenbart eine Vorrichtung zur Aushärtung eines preg-preg Reparaturmaterials.

FR 2 542 416 A1 beschreibt in eine zu reparierende Leitung einzubringende rohrförmige Hüllen.

### Darstellung der Erfindung: Aufgabe, Lösung, Vorteile

Aufgabe der vorliegenden Erfindung ist es, ein Verfahren und eine Vorrichtung zur Sanierung eines Rohrabschnitts, wobei die Sanierungsvorrichtung zumindest einen schlauchförmigen Inliner zum Abdichten einer Beschädigung des Rohrabschnitts sowie ein Heizelement aufweist, derart weiter zu verbessern, dass die Sanierung einfacher, sicherer und kostengünstiger als mit im Stand der Technik bekannten Verfahren beziehungsweise Vorrichtungen durchgeführt werden kann.

Erfindungsgemäß ist hierfür eine Sanierungsvorrichtung nach Anspruch 1 sowie ein Verfahren nach Anspruch 9 zur Sanierung eines Rohrabschnitts eines Rohrleitungssystems mit der einer erfindungsgemäßen Sanierungsvorrichtung vorgesehen, wobei die Sanierungsvorrichtung zumindest einen schlauchförmigen Inliner zum Abdichten einer Beschädigung des Rohrabschnitts sowie ein Heizelement und einen Kalibierschlauch aufweist. Das Verfahren weist erfindungsgemäß dabei zumindest die folgenden Schritte auf.
a) Einführen der Sanierungsvorrichtung in das Rohrleitungssystem, wobei der Inliner und das Heizelement in Form eines schlauchförmigen elektrischen Heizelements im Rohrabschnitt positioniert werden, und
b) Zuführen von Druckluft, damit der schlauchförmige Inliner an eine Innenwandung des Rohrabschnitts angelegt wird, und
c) Aktivieren des schlauchförmigen elektrischen Heizelements zum Aushärten des Inliners, wodurch eine Beschädigung des Rohrabschnitts abgedichtet wird.

Erfindungsgemäß wird dabei das schlauchförmige elektrische Heizelement in Schritt a) im Wesentlichen über eine gesamte Länge des innerhalb des Rohrabschnitts angeordneten Inliners angeordnet. Ferner wird in Schritt c) der Inliner im Wesentlichen entlang dessen gesamter Länge in einem einzigen Schritt ausgehärtet.

Das Rohrleitungssystem kann ein System aus Wasserrohren, zum Beispiel Abwasserrohren, sein. Der Rohrabschnitt ist ein Teil des Systems und kann ein ganzes Rohr sowie auch ein Teil eines Rohres sein. Unter einem Inliner ist erfindungsgemäß ein schlauchförmiges Trägermaterial, nämlich ein Synthesefaserschlauch mit Harz zu verstehen. Der Inliner, nämlich der Synthesefaserschlauch, ist hierfür mit Harz getränkt. Vor dem Aushärten ist somit der Inliner flexibel und kann in einfacher Weise in das Rohrleitungssystem hineingeführt und im zu sanierenden Rohrabschnitt positioniert werden.

Durch das Zuführen der Druckluft wird der Inliner innerhalb des Rohrabschnitts an die Innenwandung des zu sanierenden Rohrabschnitts gelegt beziehungsweise gedrückt, sodass zumindest der zu sanierende Abschnitt vom Inliner abgedeckt wird. Der Inliner beziehungsweise das Harz, mit welchem der Inliner imprägniert ist, wird mittels dem schlauchförmigen elektrischen Heizelement der Sanierungsvorrichtung ausgehärtet. Nach dem Aushärten ist der Inliner fest und nicht mehr flexibel. Der zu sanierende Abschnitt des Rohrabschnitts ist dadurch mittels des ausgehärteten Inliners abgedichtet.

Das schlauchförmige elektrische Heizelement weist mehrere in Längsrichtung einer Schlauchträgereinheit des Heizelements hintereinander angeordnete Heizmittel, z.B. Heizspiralen, auf. Das schlauchförmige elektrische Heizelement wird in Schritt a) zusammen mit dem Inliner in den Rohrleitungsabschnitt hineingeführt beziehungsweise im Rohrabschnitt positioniert. Danach kann der Inliner durch Aktivierung der Heizmittel in einem einzigen Schritt und gleichmäßig in jedem Abschnitt entlang der Länge des Inliners ausgehärtet werden. Somit ist es im Gegensatz zu aus dem Stand der Technik bekannten Verfahren und Vorrichtungen nicht mehr notwendig, nach dem Einsetzen eines Inliners in den zu sanierenden Rohrabschnitt ein Wärmemedium (z.B. Luft oder Wasser) in einem separaten nachgelagerten Schritt durch den Rohrabschnitt einzubringen. Bei derartigen im Stand der Technik bekannten Verfahren ist es essenziell, das Wärmemedium derart durch den Rohrabschnitt hindurchzuführen, dass jeder Bereich des Inliners entlang dessen Länge in gleicher Weise und mit gleicher Qualität aushärtet. Bei dem erfindungsgemäßen Verfahren ist es dagegen unproblematisch, einen konstanten Andruck des schlauchförmigen elektrischen Heizelements gegen die Innenwand des zu sanierenden Rohrabschnitts bzw. gegen den Inliner einzuhalten. Die durch das Heizelement abgegebene Wärmeintensität ist entlang der Länge im Wesentlichen konstant.

Basierend auf dem erfindungsgemäßen Verfahren kann somit nach dem Anordnen des Inliners und dem Zuführen der Druckluft in einem einzigen Schritt der gesamte Inliner entlang dessen Länge im zu sanierenden Rohrabschnitt gleichzeitig und gleichmäßig ausgehärtet werden.

Es ist erfindungsgemäß vorgesehen, dass die Sanierungsvorrichtung ferner einen Kalibrierschlauch aufweist, welcher vorzugsweise in Schritt a) zusammen mit dem Inliner und dem schlauchförmigen elektrischen Heizelement im Rohrabschnitt positioniert wird, wobei der Inliner um den Kalibrierschlauch herum angeordnet wird. Der Kalibrierschlauch dient dabei zum Positionieren beziehungsweise Anordnen und Ausrichten des Inliners im Rohrabschnitt. Es ist insbesondere vorteilhaft einen Kalibrierschlauch bei einem Rohrabschnitt mit einem offenen Ende zu verwenden. Der Kalibrierschlauch wird zusammen mit dem Inliner und dem schlauchförmigen elektrischen Heizelement in das Rohrleitungssystem hineingeschoben beziehungsweise hineingezogen. Nach Schritt a) wird das Ende des Kalibrierschlauchs luftdicht verschlossen, zum Beispiel zusammengebunden. In Schritt b) wird dann nicht mehr der Inliner direkt mittels Druckluft aufgeblasen, sondern der Kalibrierschlauch, welcher den um den Kalibrierschlauch angeordneten Inliner an die Innenwandung des zu sanierenden Rohrabschnitts drückt beziehungsweise legt.

Vorzugsweise kann in einem weiteren Schritt d) der Kalibrierschlauch wieder aus dem Rohrabschnitt entfernt, zum Beispiel herausgezogen werden.

Des Weiteren ist bevorzugterweise vorgesehen, dass die Sanierungsvorrichtung mittels einer Schiebeanordnung, zum Beispiel einem Stab, einem Kabel, einem Schlauch, einem Rohr oder ähnlichem in den zu sanierenden Rohrabschnitt hineingeschoben wird. Besonders bevorzugterweise wird dabei der Inliner zusammen mit dem schlauchförmigen elektrischen Heizelement mittels der Schiebeanordnung in den Rohrabschnitt hineingeschoben. Der Kalibrierschlauch wird auch zusammen mit dem Inliner und dem schlauchförmigen elektrischen Heizelement mittels der Schiebeanordnung in den Rohrabschnitt hineingeschoben. Mittels der Schiebeanordnung kann nach dem Aushärten des Inliners in einem weiteren Schritt d) der Kalibrierschlauch auch wieder herausgezogen werden.

Die Schiebeanordnung wird vorzugsweise vor Schritt a) an einem ersten Ende des Inliners in dessen Inneren befestigt. Beispielsweise kann die Schiebeanordnung im Inneren des Inliners an dessen ersten Ende angeklebt, angenäht oder festgebunden sein. Unter dem ersten Ende des Inliners ist gemäß der vorliegenden Erfindung das Ende zu verstehen, welches zuerst in das Rohrsystem beziehungsweise den zu sanierenden Rohrabschnitt hineingeschoben wird. Die Schiebeanordnung kann stattdessen im Inneren des Kalibrierschlauchs an dessen ersten Ende befestigt werden. In diesem Fall kann dann der Kalibrierschlauch nach dem Aushärten des Inliners auch in einfacher Weise mittels der Schieberanordnung wieder herausgezogen werden.

Ferner ist bevorzugterweise vorgesehen, dass das schlauchförmige elektrische Heizelement vor Schritt a) an einem ersten Ende des Inliners in dessen Innenraum befestigt wird. Am ersten Ende des Inliners wird das schlauchförmige elektrische Heizelement befestigt, sodass dieses zusammen mit dem Inliner beziehungsweise dem Kalibrierschlauch in den Rohrabschnitt hineingeschoben und darin positioniert wird. Hierfür kann das schlauchförmige elektrische Heizelement auch an oder auf der Schiebeanordnung befestigt oder in die Schiebeanordnung integriert sein.

Erfindungsgemäß ist eine Sanierungsvorrichtung nach Anspruch 1 vorgesehen, zur Sanierung eines Rohrabschnitts eines Rohrleitungssystems. Die Sanierungsvorrichtung weist zumindest einen schlauchförmigen Inliner zum Abdichten einer Beschädigung des Rohrabschnitts sowie ein Heizelement auf. Erfindungsgemäß ist das Heizelement als schlauchförmiges elektrisches Heizelement ausgebildet. Ferner weist das Heizelement eine Vielzahl von auf und/oder in einer Schlauchträgereinheit des Heizelements angeordneten Heizmitteln, insbesondere Heizspiralen, auf. Erfindungsgemäß weist die Sanierungsvorrichtung ferner einen Kalibrierschlauch auf, wobei der Inliner um den Kalibrierschlauch herum angeordnet ist.

Die Vielzahl der Heizmittel ist entlang der gesamten Länge des in den Rohrabschnitt eingeführten Inliners angeordnet. Somit muss analog dem vorbeschriebenen Verfahren das schlauchförmige elektrische Heizelement nach dem Positionieren des Inliners und dem Zuführen von Druckluft nicht mehr stückchenweise durch den Rohrabschnitt hindurchgeführt, zum Beispiel gezogen beziehungsweise geschoben werden. Da das schlauchförmige elektrische Heizelement mit einer Vielzahl von Heizmitteln im Wesentlichen über eine gesamte Länge des im Rohrabschnitt angeordneten Inliners angeordnet beziehungsweise positioniert ist, kann nach dem Zuführen von Druckluft in einfacher und präziser Weise der Inliner beziehungsweise das Harz des Inliners mit einem einzigen Schritt entlang der gesamten Länge des im Rohrabschnitt angeordneten Inliners gleichmäßig ausgehärtet werden.

Der Inliner kann umfänglich um das schlauchförmige elektrische Heizelement herum angeordnet sein.

Die Schlauchträgereinheit könnte ein Glasgewebe, insbesondere ein Silikonglasgewebe und/oder ein Aluminiumglasgewebe, aufweisen oder daraus bestehen.

Erfindungsgemäß ist das schlauchförmige elektrische Heizelement an einem ersten Ende des Inliners der Sanierungsvorrichtung befestigt. Hierbei kann das Heizelement im Inneren des Inliners befestigt sein.

Auch ist bevorzugterweise vorgesehen, dass das schlauchförmige elektrische Heizelement flexibel und/oder inversierbar ausgebildet ist. Beispielsweise kann das Heizelement als flexibler Schlauch bzw. flexible Schlauchträgereinheit mit mehreren hintereinander darauf und/oder darin angeordneten elektrischen Heizmitteln ausgebildet sein. Hierfür können die Heizmittel auf der Schlauchträgereinheit angeordnet oder in diese integriert sein. Die Heizmittel können zum Beispiel spiralförmig auf und/oder in der Schlauchträgereinheit angeordnet sein. Alternativerweise oder zusätzlich können die Heizmittel netzförmig auf und/oder in der Schlauchträgereinheit angeordnet sein.

Des Weiteren ist es bevorzugterweise vorgesehen, dass das schlauchförmige elektrische Heizelement in einem Material eines Kalibrierschlauchs der Sanierungsvorrichtung integriert beziehungsweise eingearbeitet und/oder auf dem Kalibrierschlauch angeordnet beziehungsweise aufgebracht ist. Die Heizelemente können hierfür zusammen mit der flexiblen Schlauchträgereinheit oder auch ohne diese in den Kalibrierschlauch integriert und/oder auf diesen aufgebracht sein. Auch bei dieser Ausführungsform sind die Heizmittel des Heizelements bevorzugterweise umfänglich sowie auch in Längsrichtung des Kalibrierschlauches verteilt angeordnet. Da nach dem Zuführen von Druckluft der Kalibrierschlauch direkt am Inliner anliegt, ist auch hier der Abstand zwischen den Heizmitteln des Heizelements und dem zu härtenden Harz des Inliners sehr gering und vor allem in Umfangsrichtung sowie auch in Längsrichtung des gesamten Inliners konstant.

Beispielsweise könnte das schlauchförmige elektrische Heizelement mit einem Material des Kalibrierschlauchs der Sanierungsvorrichtung verklebt und/oder verschweißt sein. Hierfür könnten die Heizelemente zusammen mit der flexiblen Schlauchträgereinheit oder auch ohne diese mit dem Kalibrierschlauch verklebt und/oder verschweißt sein. Vorzugsweise ist das schlauchförmige elektrische Heizelement mittels einer zusätzlichen um den Kalibrierschlauch herum angeordneten Schicht, insbesondere einer Silikonschicht, auf dem Kalibrierschlauch fixiert. Das schlauchförmige elektrische Heizelement ist dafür zwischen Kalibrierschlauch und der zusätzlichen Schicht angeordnet.

Die Sanierungsvorrichtung weist bevorzugterweise eine Schiebeanordnung auf, mit welcher der Inliner und/oder ein Kalibrierschlauch der Sanierungsvorrichtung in den Rohrabschnitt hineingeschoben und darin positioniert werden kann. Die Schiebeanordnung ist hierfür im Inneren des Inliners und/oder des Kalibrierschlauchs angeordnet und kann zum Beispiel am ersten Ende des Inliners und/oder des Kalibrierschlauchs in dessen Innerem befestigt sein. Die Schiebevorrichtung kann zum Beispiel als Schiebekabel, Schiebestange oder Schiebeschlauch ausgebildet sein.

Auch ist bevorzugterweise vorgesehen, dass das schlauchförmige elektrische Heizelement mit der Schiebeanordnung verbunden und/oder an der Schiebeanordnung befestigt und/oder in die Schiebeanordnung integriert ist.

Die Sanierungsvorrichtung ist vorzugsweise zur Sanierung eines Anschlussstutzens des Rohrleitungssystems ausgebildet, wobei der Kalibrierschlauch als Packerblase ausgebildet ist. Die Packerblase weist einen ersten Abschnitt zur Anordnung in einem Hauptleitungsabschnitt des Anschlussstutzens sowie einen zweiten Abschnitt zur Anordnung in einem Nebenleitungsabschnitt des Anschlussstutzens auf.

Ferner ist der schlauchförmige Inliner vorzugsweise als Kurzliner zur Sanierung eines Kurzrohrs des Rohrleitungssystems ausgebildet. Hierunter ist ein Rohr mit hoher statischer und/oder chemischer Belastbarkeit zu verstehen. Hiermit können punktuelle Rohrschäden in einfacher Weise langfristig saniert werden. Der Kurzliner weist bevorzugterweise ein mit Harz imprägniertes Glasfaserlaminat auf.

### Kurze Beschreibung der Zeichnungen

Die Erfindung wird im Folgenden anhand bevorzugter Ausführungsform beispielhaft erläutert.

Es zeigen schematisch:
- Figur 1a, 1b:: zeigt eine Sanierungsvorrichtung zur Sanierung eines den Schutzumfang der Rohrabschnitts, wobei diese Sanierungsvorrichtung nicht unter Ansprüche fällt;
- Figur 2a, 2b:: zeigt eine weitere Sanierungsvorrichtung zur Sanierung eines Rohrabschnitts, wobei diese Sanierungsvorrichtung nicht unter den Schutzumfang der Ansprüche fällt;
- Figur 3a, 3b:: zeigt eine Sanierungsvorrichtung mit Kalibrierschlauch und Schiebeanordnung;
- Figur 4a, 4b:: zeigt eine Sanierungsvorrichtung mit Kalibrierschlauch und Schiebeanordnung;
- Figur 5:: zeigt eine Kurzliner Sanierungsvorrichtung mit Kalibrierschlauch und Schiebeanordnung;
- Figur 6:: zeigt eine weitere Kurzliner Sanierungsvorrichtung mit Kalibrierschlauch und Schiebeanordnung;
- Figur 7:: zeigt eine Sanierungsvorrichtung mit einem als Packerblase ausgebildetem Kalibrierschlauch zur Sanierung eines Anschlussstutzens eines Rohrleitungssystems; und
- Figur 8:: zeigt eine weitere Sanierungsvorrichtung mit einem als Packerblase ausgebildetem Kalibrierschlauch zur Sanierung eines Anschlussstutzens eines Rohrleitungssystems;

### Bevorzugte Ausführungsformen der Erfindung

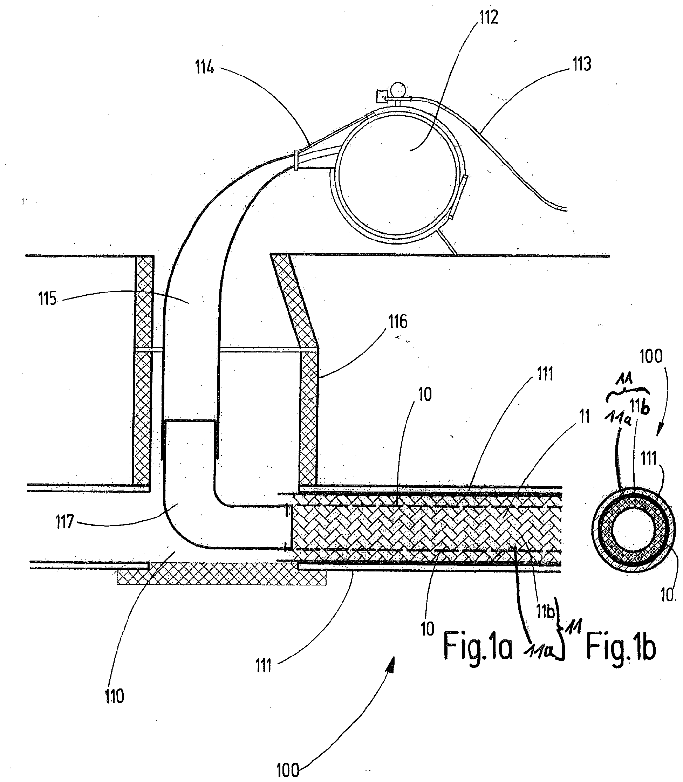

Figuren 1a und 1b zeigen rein beispielhaft eine Sanierungsvorrichtung 100 zur Sanierung eines Rohrabschnitts 111 eines Rohrleitungssystems 110, wobei der Rohrabschnitt 111 ein geschlossenes Ende (nicht in Figuren 1a und 1b im Detail dargestellt) aufweist.

Mittels eines Inversionsgeräts 112 wird ausgehend vom Mündungsrohr 114 des Inversionsgeräts 112 ein Gewebeschlauch 115, welcher auch als Druckschlauch dient, in den Inversionsschacht 116 eingelassen und auf den Inversionsbogen 114 aufgesteckt. Die Sanierungsvorrichtung 100 wurde in das Rohrleitungssystem 110 eingeführt und im zu sanierenden Rohrabschnitt 111 positioniert. In diesem Ausführungsbeispiel weist die Sanierungsvorrichtung 100 einen schlauchförmigen Inliner 10, welcher mit Harz getränkt ist, sowie ein schlauchförmiges elektrisches Heizelement 11 mit mehreren hintereinander auf einer Schlauchträgereinheit 11a angeordneten Heizmitteln 11b auf. Am ersten Ende 14 des Inliners 10 ist in dessen Innerem das schlauchförmige elektrische Heizelement 11 mit dem Inliner 10 verbunden. Ferner ist der Inliner 10 an dessen ersten Ende 14 verschlossen.

Nach dem Positionieren der Sanierungsvorrichtung 100 im Rohrabschnitt 111 wird über das Inversionsgerät 112 Druckluft hinzugeführt, sodass sich der schlauchförmige Inliner 10 an die Innenwandung des zu sanierenden Rohrabschnitts 111 anlegt beziehungsweise daran gedrückt wird. Im Anschluss wird das schlauchförmige elektrische Heizelement 11 aktiviert, sodass der Inliner 10 beziehungsweise das Harz, mit welchem der Inliner 10 imprägniert ist, aushärtet und somit Beschädigungen des Rohrabschnitts 111 abgedichtet werden.

Das schlauchförmige elektrische Heizelement 11 ist hierfür flexibel ausgebildet. Bei dem in Figur 1a gezeigten Beispiel sind die Heizmittel 11b netzförmig auf der Schlauchträgereinheit 11a angeordnet. Ferner ist das schlauchförmige elektrische Heizelement 11 im schlauchförmigen Inliner 10 über dessen gesamten Länge angeordnet, sodass die Aushärtung in einem einzigen Schritt durchgeführt werden kann und das schlauchförmige elektrische Heizelement 11 nicht hindurchgeschoben beziehungsweise hindurchgezogen werden muss.

In Figur 1b ist ein Querschnitt durch den zu sanierenden Rohrabschnitt 111 mit eingeführter Sanierungsvorrichtung 100 gezeigt.

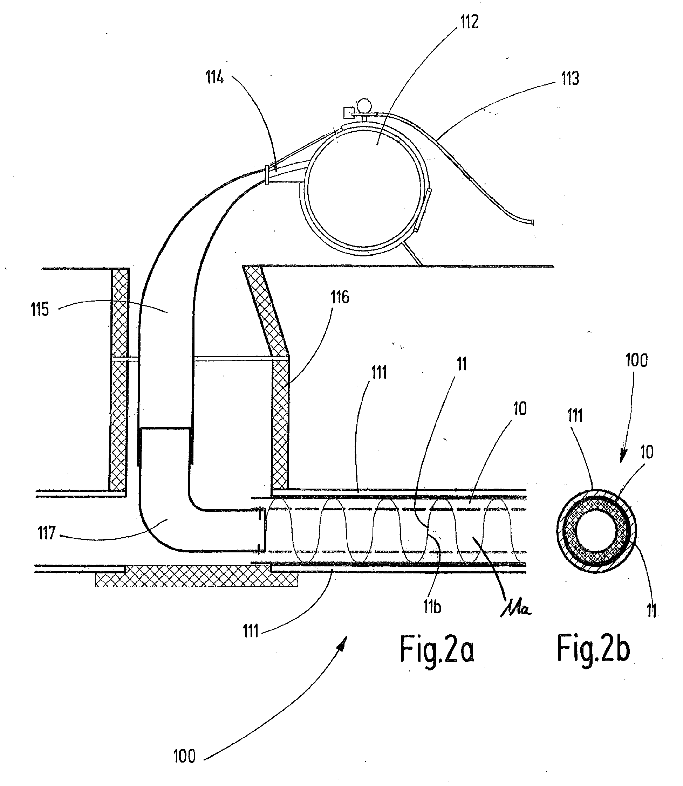

Figuren 2a und 2b zeigen rein beispielhaft eine weitere Sanierungsvorrichtung 100 zur Sanierung eines Rohrabschnitts 111. Im Gegensatz zu dem in Fig. 1a und 1b gezeigten Beispiel sind die Heizmittel 11b hier spiralförmig auf der Schlauchträgereinheit 11a angeordnet.

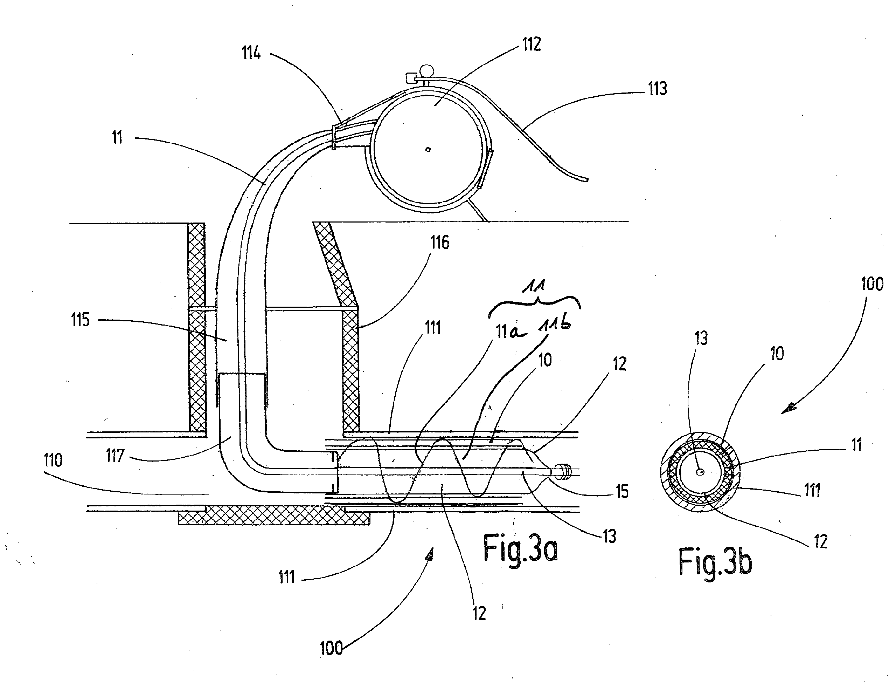

In den Figuren 3a und 3b ist eine Sanierungsvorrichtung 100 mit Kalibrierschlauch 12 und Schiebeanordnung 13 gezeigt. Nach dem Einführen und Positionieren der Sanierungsvorrichtung 100 innerhalb des Rohrabschnitts 111 wird dem Kalibrierschlauch 12 über das Inversionsgerät 112 Druckluft hinzugeführt. Dadurch drückt der Kalibrierschlauch 12 den schlauchförmigen Inliner 10 an die Innenwandung des zu sanierenden Rohrabschnitts 111.

Ähnlich wie in Figuren 1a, 1b, 2a und 2b gezeigt, kann das schlauchförmige elektrische Heizelement 11 hierfür ebenfalls flexibel ausgebildet sein. In den Fig. 3a und 3b sind die Heizmittel 11b hier wie in Fig. 2a und 2b spiralförmig auf der Schlauchträgereinheit 11a angeordnet.

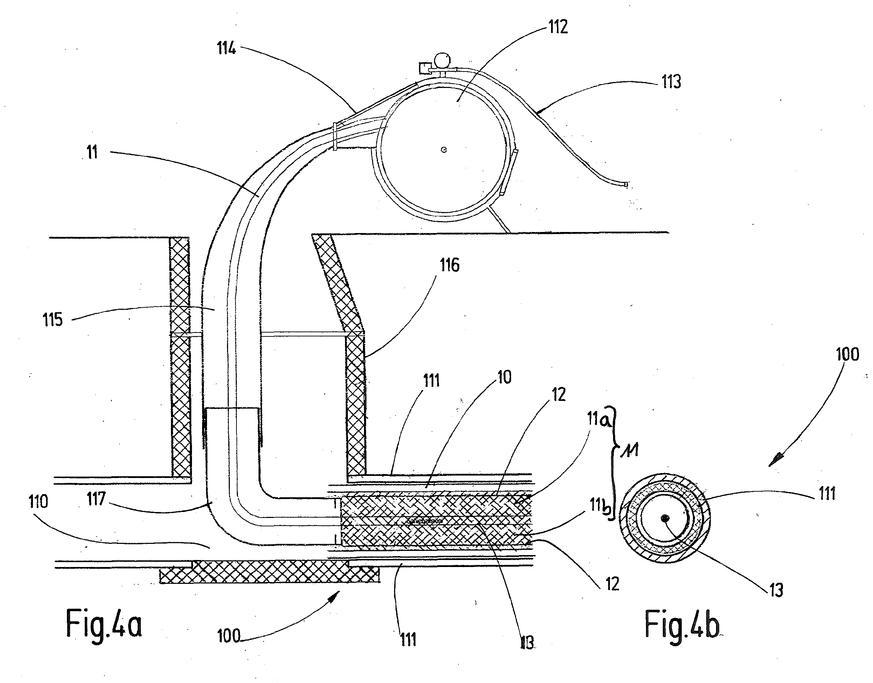

In den Figuren 4a und 4b ist eine weitere Sanierungsvorrichtung 100 mit Kalibrierschlauch 12 und Schiebeanordnung 13 gezeigt. Der Aufbau entspricht im Wesentlichen dem Beispiel aus den Fig. 3a und 3b. Im Gegensatz hierzu sind die Heizmittel 11b aber wie in Fig. 1a und 1b netzförmig auf der Schlauchträgereinheit 11a angeordnet.

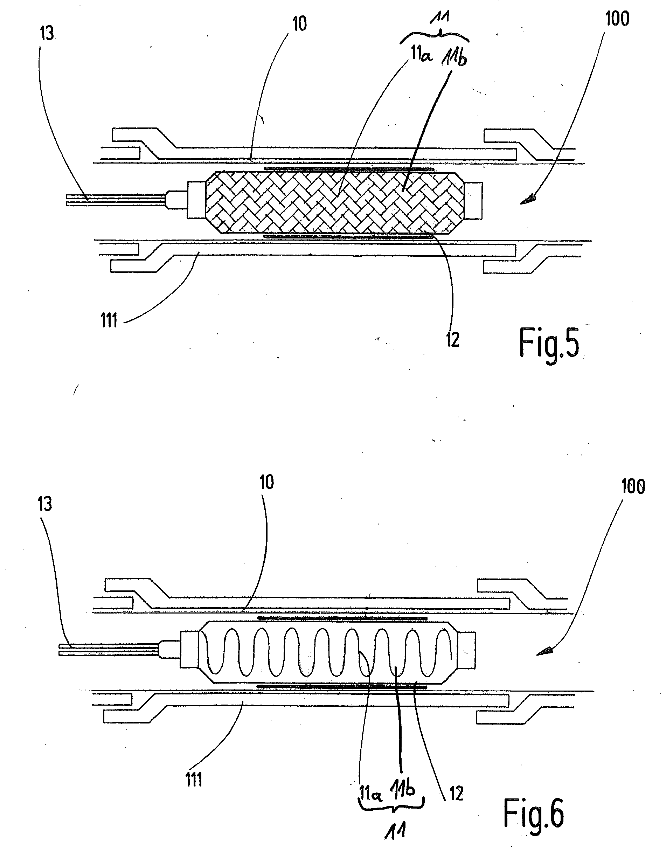

In den Figuren 5 und 6 ist eine weitere Variante einer Sanierungsvorrichtung 100 mit Kalibrierschlauch 12 und Schiebeanordnung 13 gezeigt. In diesen Beispielen ist die Sanierungsvorrichtung 100 bzw. dessen Inliner 10 als Kurzliner für Kurzrohre mit hoher statischer und/oder chemischer Belastbarkeit ausgebildet. Hiermit können punktuelle Rohrschäden in einfacher Weise langfristig saniert werden. Der schlauchförmige Inliner 10 weist bevorzugt ein mit Harz imprägniertes Glasfaserlaminat auf.

In Figur 5 sind die Heizmittel 11b wie in Fig. 1a und 1b netzförmig auf der Schlauchträgereinheit 11a angeordnet. In Figur 6 sind die Heizmittel 11b wie in Fig. 2a und 2b spiralförmig auf der Schlauchträgereinheit 11a angeordnet.

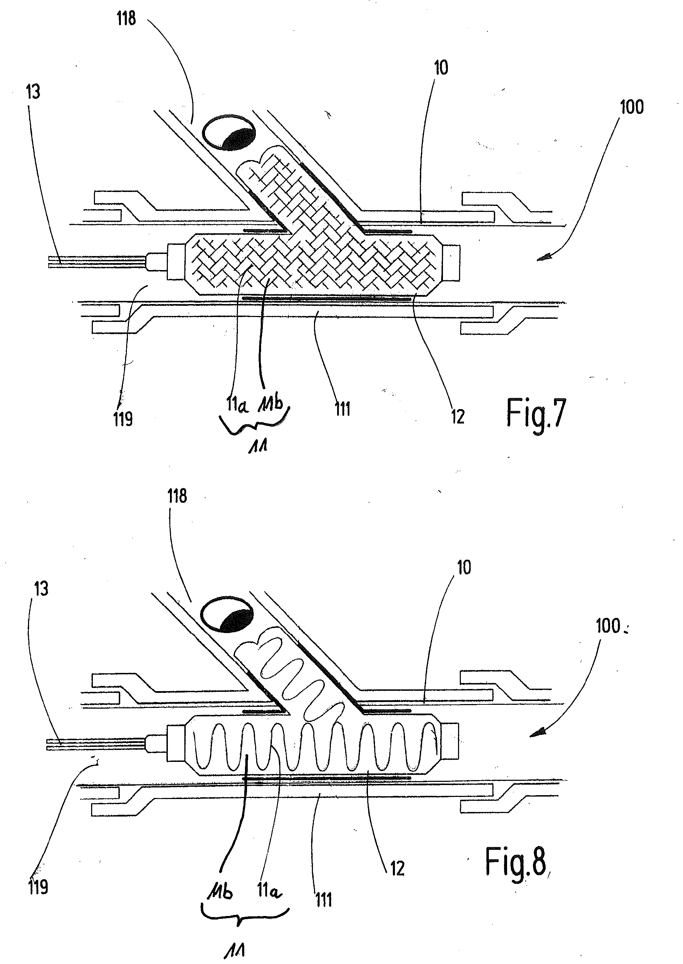

In den Figuren 7 und 8 ist eine weitere Variante einer Sanierungsvorrichtung 100 mit Kalibrierschlauch 12 und Schiebeanordnung 13 gezeigt. Die hier gezeigte Variante dient zur Sanierung eines Anschlussstutzens eines Rohrleitungssystems 110. Hierfür ist der Kalibrierschlauch 12 als Packerblase mit einem ersten Abschnitt zur Anordnung in einem Hauptleitungsabschnitt 119 des Anschlussstutzens und einem zweiten Abschnitt zur Anordnung in einem Nebenleitungsabschnitt 118 des Anschlussstutzens ausgebildet. Vor dem Einführen der Packerblase in das Rohrleitungssystem 110 kann der zweite Abschnitt eingestülpt werden. Beim anschließenden Positionieren der Packerblase im Anschlussstutzen wird der vorher eingestülpte zweite Abschnitt durch die Zuführung von Druckluft in den Nebenleitungsabschnitt 118 des Anschlussstutzens hinein entfaltet.

In beiden Varianten ist zumindest ein schlauchförmiges elektrisches Heizelement 11 vorgesehen, wobei die Heizmittel 11b im Wesentlichen über die gesamte Länge des ersten und des zweiten Abschnitts der Packerblase angeordnet sind. In Figur 7 sind die Heizmittel 11b wie in Fig. 1a und 1b netzförmig auf der Schlauchträgereinheit 11a angeordnet. In Figur 8 sind die Heizmittel 11b wie in Fig. 2a und 2b spiralförmig auf der Schlauchträgereinheit 11a angeordnet.

### Bezugszeichenliste

- 100: Sanierungsvorrichtung

- 10: Schlauchförmiger Inliner
- 11: Schlauchförmiges elektrisches Heizelement
- 11a: Schlauchträgereinheit
- 11b: Heizmittel
- 12: Kalibrierschlauch
- 13: Schiebeanordnung
- 14: Erstes Ende des Inliners
- 15: Erstes Ende des Kalibrierschlauchs

- 110: Rohrleitungssystem
- 111: Rohrabschnitt
- 112: Inversionsgerät
- 113: Druckluftschlauch
- 114: Mündungsrohr
- 115: Gewebeschlauch
- 116: Inversionsschacht
- 117: Inversionsbogen
- 118: Nebenleitungsabschnitt
- 119: Hauptleitungsabschnitt

## Patentansprüche

1. Sanierungsvorrichtung (100) zur Sanierung eines Rohrabschnitts (111) eines Rohrleitungssystems (110), wobei die Sanierungsvorrichtung (100) zumindest einen schlauchförmigen Inliner (10) zum Abdichten einer Beschädigung des Rohrabschnitts (111) sowie ein Heizelement (11) aufweist,
wobei
das Heizelement (11) schlauchförmig ausgebildet ist und mit einer Vielzahl von elektrischen Heizmitteln (11b) im Wesentlichen über eine gesamte Länge des im Rohrabschnitt (111) angeordneten Inliners (10) angeordnet ist,
wobei die Sanierungsvorrichtung (100) ferner einen Kalibrierschlauch (12) aufweist, wobei der Inliner (10) um den Kalibrierschlauch (12) herum angeordnet ist,
wobei
das schlauchförmige elektrische Heizelement (11) an einem ersten Ende des Inliners (10) befestigt ist,
wobei unter dem Inliner (10) ein schlauchförmiges Trägermaterial, nämlich ein Synthesefaserschlauch, zu verstehen ist,
wobei der Inliner (10) mit Harz getränkt ist und vor dem Aushärten flexibel ist.

2. Sanierungsvorrichtung (100) gemäß Anspruch 1,
**dadurch gekennzeichnet,**
**dass** das schlauchförmige elektrische Heizelement (11) flexibel und/oder inversierbar ausgebildet ist.

3. Sanierungsvorrichtung (100) gemäß einem der vorangehenden Ansprüche,
**dadurch gekennzeichnet,**
**dass** das schlauchförmige elektrische Heizelement (11) eine flexible Schlauchträgereinheit (11a) aufweist, wobei die elektrischen Heizmittel (11b) auf der Schlauchträgereinheit (11a) angeordnet und/oder in diese integriert sind.

4. Sanierungsvorrichtung (100) gemäß einem der vorangehenden Ansprüche,
**dadurch gekennzeichnet,**
**dass** das schlauchförmige elektrische Heizelement (11) in ein Material des Kalibrierschlauchs (12) der Sanierungsvorrichtung (100) integriert und/oder auf dem Kalibrierschlauch (12) angeordnet ist.

5. Sanierungsvorrichtung (100) gemäß einem der vorangehenden Ansprüche,
**dadurch gekennzeichnet,**
**dass** die Sanierungsvorrichtung (100) eine Schiebeanordnung (13) aufweist, mit welcher der Inliner (10) und der Kalibrierschlauch (12) der Sanierungsvorrichtung in den Rohrabschnitt (111) hineingeschoben werden kann.

6. Sanierungsvorrichtung (100) gemäß Anspruch 5,
**dadurch gekennzeichnet,**
**dass** das schlauchförmige elektrische Heizelement (11) mit der Schiebeanordnung (13) verbunden und/oder an der Schiebeanordnung befestigt und/oder in die Schiebeanordnung (13) integriert ist.

7. Sanierungsvorrichtung (100) gemäß einem der vorangehenden Ansprüche,
**dadurch gekennzeichnet,**
**dass** zur Sanierung eines Anschlussstutzens des Rohrleitungssystems (110) der Kalibrierschlauch (12) als Packerblase ausgebildet ist, wobei die Packerblase einen ersten Abschnitt zur Anordnung in einem Hauptleitungsabschnitt (119) des Anschlussstutzens sowie einen zweiten Abschnitt zur Anordnung in einem Nebenleitungsabschnitt (118) des Anschlussstutzens aufweist.

8. Sanierungsvorrichtung (100) gemäß einem der vorangehenden Ansprüche,
**dadurch gekennzeichnet,**
**dass** der schlauchförmige Inliner (10) als Kurzliner zur Sanierung eines Kurzrohrs des Rohrleitungssystems (11) ausgebildet ist und/oder ein mit Harz imprägniertes Glasfaserlaminat aufweist.

9. Verfahren zur Sanierung eines Rohrabschnitts (111) eines Rohrleitungssystems (110) mit einer Sanierungsvorrichtung (100) nach einem der Ansprüche 1 bis 8, wobei die Sanierungsvorrichtung (100) zumindest einen schlauchförmigen Inliner (10) zum Abdichten einer Beschädigung des Rohrabschnitts (111), einen Kalibrierschlauch (12) sowie ein schlauchförmiges elektrisches Heizelement (11) aufweist, wobei das Verfahren zumindest die folgenden Schritte aufweist:
a) Einführen der Sanierungsvorrichtung (100) in das Rohrleitungssystem (110), wobei der Inliner (10) und das schlauchförmige elektrische Heizelement (11) im Rohrabschnitt (111) positioniert werden, und
b) Zuführen von Druckluft, damit der schlauchförmige Inliner (10) an eine Innenwandung des Rohrabschnittes (111) angelegt wird, und
c) Aktivieren des schlauchförmigen elektrischen Heizelements (11) zum Aushärten des Inliners (10) wodurch eine Beschädigung des Rohrabschnittes (111) abgedichtet wird,
**dadurch gekennzeichnet,**
**dass** das schlauchförmige elektrische Heizelement (11) in Schritt a) im Wesentlichen über eine gesamte Länge des innerhalb des Rohrabschnitts (111) angeordneten Inliners (10) angeordnet wird und in Schritt c) der Inliner (10) im Wesentlichen entlang dessen gesamten Länge in einem Schritt ausgehärtet wird.

10. Verfahren gemäß Anspruch 9,
**dadurch gekennzeichnet,**
**dass** der Kalibrierschlauch (12) in Schritt a) zusammen mit dem Inliner (10) und dem schlauchförmigen elektrischen Heizelement (11) im Rohrabschnitt (111) positioniert wird, wobei der Inliner (10) um den Kalibrierschlauch (12) herum angeordnet wird.

11. Verfahren gemäß Anspruch 9 oder 10,
**dadurch gekennzeichnet,**
**dass** die Sanierungsvorrichtung (100) mittels einer Schiebeanordnung (13) in den Rohrabschnitt (111) hineingeschoben wird.

12. Verfahren gemäß Anspruch 11,
**dadurch gekennzeichnet,**
**dass** die Schiebeanordnung (13) vor Schritt a) an einem ersten Ende (14) des Inliners (10) in dessen Innerem befestigt wird.

13. Verfahren gemäß einem der Ansprüche 9 bis 12,
**dadurch gekennzeichnet,**
**dass** das schlauchförmige elektrische Heizelement (13) vor Schritt a) an einem ersten Ende des Inliners (10) in dessen Innerem befestigt wird.

## Claims

1. A relining device (100) for relining a tube section (111) of a pipeline system (110), wherein the relining device (100) has at least one tubular inliner (10) for sealing a damage to the tube section (111) as well as a heating element (11), wherein
the heating element (11) is of tubular form and is arranged with a plurality of electrical heating means (11b) substantially over an entire length of the inliner (10) arranged in the tube section (111),
wherein the relining device (100) further has a calibration hose (12), wherein the inliner (10) is arranged around the calibration hose (12)
wherein
the tubular electrical heating element (11) is fastened to a first end of the inliner (10),
wherein the inliner (10) can be understood as a tubular carrier material, namely a synthetic fiber hose,
wherein the inliner (10) is impregnated with resin and is flexible before curing.

2. The relining device (100) according to claim 1,
**characterized in that**
the tubular electrical heating element (11) is of flexible and/or invertible form.

3. The relining device (100) according to one of the preceding claims,
**characterized in that**
the tubular electrical heating element (11) has a flexible tube carrier unit (11a), wherein the electrical heating means (11b) are arranged on the tube carrier unit (11a) and/or are integrated therein.

4. The relining device (100) according to one of the preceding claims,
**characterized in that**
the tubular electrical heating element (11) is integrated into a material of a calibration hose (12) of the relining device (100) and/or is arranged on the calibration hose (12).

5. The relining device (100) according to one of the preceding claims,
**characterized in that**
the relining device (100) has a pushing arrangement (13) with which the inliner (10) and/or the calibration hose (12) of the relining device can be pushed into the tube section (111).

6. The relining device (100) according to claim 5
**characterized in that,**
the tubular electrical heating element (11) is connected to the pushing arrangement (13) and/or fastened to the pushing arrangement and/or integrated into the pushing arrangement (13).

7. The relining device (100) according to one of the preceding claims,
**characterized in that**
for the relining of a connecting piece of the pipeline system (110) the calibration hose (12) is formed as a packer bladder, wherein the packer bladder has a first section for arrangement in a main line section (119) of the connecting piece as well as a second section for arrangement in a secondary line section (118) of the connecting piece.

8. The relining device (100) according to one of the preceding claims,
**characterized in that**
the tubular inliner (10) is designed as a short liner for relining a short pipe of the pipeline system (110) and/or has a glass fiber laminate impregnated with resin.

9. Method for relining a tube section (111) of a pipeline system (110) with a relining device (100) according to one of claims 1 to 8, wherein the relining device (100) has at least one tubular inliner (10) for sealing a damage to the tube section (111), a calibration hose (12) as well as a tubular electrical heating element (11), wherein the method has at least the following steps:
a) inserting the relining device (100) into the pipeline system (110), wherein the inliner (10) and the tubular electrical heating element (11) are positioned in the tube section (111), and
b) feeding compressed air, so that the tubular liner (10) is attached to an inner wall of the tube section (111), and
c) activating the tubular electrical heating element (11) for curing the inliner (10), thereby sealing a damage to the tube section (111),
**characterized in that**
in step a), the tubular electrical heating element (11) is arranged substantially over an entire length of the inliner (10) arranged within the tube section (111), and in step c), the inliner (10) is cured in one step substantially along the entire length thereof.

10. The method according to claim 9,
**characterized in that**
in step a), the calibration hose (12) is positioned in the tube section (111) together with the inliner (10) and the tubular electrical heating element (11), wherein the inliner (10) is arranged around the calibration hose (12).

11. The method according to claim 9 or 10,
**characterized in that**
that the relining device (100) is pushed into the tube section (111) by means of a pushing arrangement (13).

12. The method according to claim 11,
**characterized in that**
before step a), the pushing arrangement (13) is fastened to a first end (14) of the inliner (10) in the interior thereof.

13. The method according to one of claims 9 to 12,
**characterized in that**
before step a), the tubular electrical heating element (13) is fastened to a first end (14) of the inliner (10) in the interior thereof.

## Revendications

1. Dispositif d'assainissement (100) destiné à assainir une section de tuyau (111) d'un système de tuyauterie (110), sachant que le dispositif d'assainissement (100) comporte au moins une garniture intérieure tubulaire (10) pour calfeutrer contre tout endommagement de la section de tuyau (111), ainsi qu'un élément chauffant (11),
sachant que l'élément chauffant (11) est constitué de forme tubulaire et est disposé avec une pluralité de moyens chauffants électriques (11b) pour l'essentiel sur toute une longueur de la garniture intérieure (10) disposée dans la section de tuyau (111),
sachant que le dispositif d'assainissement (100) comporte en plus un flexible de calibrage (12), sachant que la garniture intérieure (10) est disposée autour du flexible de calibrage (12),
sachant que l'élément chauffant électrique tubulaire (11) est fixé à une première extrémité de la garniture intérieure (10),
sachant qu'un matériau de support tubulaire, notamment un flexible en fibres synthétiques, est à concevoir sous la garniture intérieure (10),
sachant que la garniture intérieure (10) est imprégnée de résine et est souple avant le durcissement.

2. Dispositif d'assainissement (100) selon la revendication 1,
**caractérisé en ce que**
l'élément chauffant électrique tubulaire (11) est constitué souple et/ou réversible.

3. Dispositif d'assainissement (100) selon l'une quelconque des revendications précédentes,
**caractérisé en ce que**
l'élément chauffant électrique tubulaire (11) comporte une unité de support de flexible souple (11a), sachant que l'élément chauffant électrique (11b) est disposé sur l'unité de support de flexible (11a) et/ou intégré dans celle-ci.

4. Dispositif d'assainissement (100) selon l'une quelconque des revendications précédentes,
**caractérisé en ce que**
l'élément chauffant électrique tubulaire (11) est intégré dans un matériau du flexible de calibrage (12) du dispositif d'assainissement (100) et/ou est disposé sur le flexible de calibrage (12).

5. Dispositif d'assainissement (100) selon l'une quelconque des revendications précédentes,
**caractérisé en ce que**
le dispositif d'assainissement (100) comporte un système coulissant (13) avec lequel la garniture intérieure (10) et le flexible de calibrage (12) du dispositif d'assainissement peuvent être glissés dans la section de tuyau (111).

6. Dispositif d'assainissement (100) selon la revendication 5,
**caractérisé en ce que**
l'élément chauffant électrique tubulaire (11) est relié au système coulissant (13) et/ou fixé au système coulissant et/ou intégré au système coulissant (13).

7. Dispositif d'assainissement (100) selon l'une quelconque des revendications précédentes,
**caractérisé en ce que**
pour l'assainissement d'une tubulure de raccordement du système de tuyauterie (110), le flexible de calibrage (12) est constitué comme une vessie de garniture d'étanchéité, sachant que la vessie de garniture d'étanchéité comporte une première section pour la mise en place dans une section de conduit principale (119) de la tubulure de raccordement ainsi qu'une deuxième section pour la mise en place dans une section de conduit secondaire (118) de la tubulure de raccordement.

8. Dispositif d'assainissement (100) selon l'une quelconque des revendications précédentes,
**caractérisé en ce que**
la garniture intérieure tubulaire (10) est constituée en tant que garniture courte pour l'assainissement d'un tuyau court du système de tuyauterie (110) et/ou comporte un laminé de fibres de verre imprégné de résine.

9. Procédé d'assainissement d'une section de tuyau (111) d'un système de tuyauterie (110) avec un dispositif d'assainissement (100) selon l'une quelconque des revendications 1 à 8, sachant que le dispositif d'assainissement (100) comporte au moins une garniture intérieure tubulaire (10) pour calfeutrer contre tout endommagement de la section de tuyau (111), un flexible de calibrage (12) ainsi qu'un élément chauffant électrique tubulaire (11), sachant que le procédé comporte au moins les étapes suivantes :
a) introduction du dispositif d'assainissement (100) dans le système de tuyauterie (110), sachant que la garniture intérieure (10) et l'élément chauffant électrique tubulaire (11) sont positionnés dans la section de tuyau (111), et
b) apport d'air comprimé afin que la garniture intérieure tubulaire (10) soit appliquée à une paroi intérieure de la section de tuyau (111), et
c) activation de l'élément chauffant électrique tubulaire (11) pour le durcissement de la garniture intérieure (10), la section de tuyau (111) étant de ce fait calfeutrée contre tout endommagement,
**caractérisé en ce que**
l'élément chauffant électrique tubulaire (11) est disposé dans l'étape a) pour l'essentiel sur toute une longueur de la garniture intérieure (10) disposée à l'intérieur de la section de tuyau (111) et dans l'étape c), la garniture intérieure (10) est durcie dans une étape, pour l'essentiel le long de toute la longueur de celle-ci.

10. Procédé selon la revendication 9,
**caractérisé en ce que**
le flexible de calibrage (12) dans l'étape a) est positionné ensemble avec la garniture intérieure (10) et l'élément chauffant électrique tubulaire (11) dans la section de tuyau (111), sachant que la garniture intérieure (10) est disposée autour du flexible de calibrage (12).

11. Procédé selon la revendication 9 ou 10,
**caractérisé en ce que**
le dispositif d'assainissement (100) est glissé au moyen d'un système coulissant (13) dans la section de tuyau (111).

12. Procédé selon la revendication 11,
**caractérisé en ce que**
le système coulissant (13) est fixé avant l'étape a) à une première extrémité (14) de la garniture intérieure (10) à l'intérieur de celle-ci.

13. Procédé selon l'une quelconque des revendications 9 à 12,
**caractérisé en ce que**
l'élément chauffant électrique tubulaire (13) est fixé avant l'étape a) à une première extrémité (14) de la garniture intérieure (10) à l'intérieur de celle-ci.
